# EUROPÄISCHE PATENTSCHRIFT

(11) **EP 1 762 468 B1**
(45) Veröffentlichungstag und Bekanntmachung des Hinweises auf die Patenterteilung: **02.12.2009**
(21) Anmeldenummer: 06015860.7
(22) Anmeldetag: 31.07.2006
(51) Int. Cl.: B62D 25/14

(54) **Querträger für ein Kraftfahrzeug**
Transverse beam for motor vehicle
Traverse pour véhicule automobile

(30) Priorität: 12.09.2005 DE 102005043504
(43) Veröffentlichungstag der Anmeldung: 14.03.2007
(73) Patentinhaber: Behr GmbH & Co. KG, 70469 Stuttgart (DE)
(72) Erfinder: Merkle, Christian, 73655 Plüderhausen (DE); Wolf, Walter, Dipl.-Ing., 71570 Oppenweiler-Zell (DE)

(56) Entgegenhaltungen:
- EP-A- 1 193 161
- WO-A-2004/041565
- WO-A-2005/035286
- DE-A1- 4 232 846
- DE-A1- 4 232 847
- DE-A1- 10 045 347
- DE-A1- 10 064 522
- DE-A1- 10 340 248
- JP-A- 2001 246 922
- JP-A- 2001 253 368
- US-A- 5 934 733

## Beschreibung

Die Erfindung betrifft einen Querträger für ein Kraftfahrzeug gemäß dem Oberbegriff des Anspruchs 1.

Ein solcher Querträger ist beispielsweise aus der WO 2005/035286 A1 bekannt.

Aus der DE 102 54 348 B4 ist eine Baugruppe für einen Cockpit-Bereich eines Kraftfahrzeugs bekannt, mit einem sich über die Breite eines Kraftfahrzeuginnenraums erstreckenden und als Trägerstruktur ausgebildeten Querträger, wobei der Querträger und ein Armaturenbrett aus einem Fahrer-, einem Mittel- und einem Beifahrermodul aufgebaut sind, dadurch gekennzeichnet, dass die Module so ausgestaltet sind, dass benachbarte Module jeweils sowohl indirekt über ein Adapterstück als auch indirekt aneinander befestigbar sind, derart, dass der Querträger und das Armaturenbrett an unterschiedliche Kraftfahrzeugbreiten anpassbar sind. Dabei bilden der Querträger und das Armaturenbrett im zusammengebauten Zustand eine vormontierte, selbsttragende Versteifungseinheit, die in das Kraftfahrzeug einbaubar ist und im eingebauten Zustand das Kraftfahrzeug in Querrichtung aussteift.

Ein derartiger Querträger lässt jedoch noch Wünsche offen.

Es ist Aufgabe der Erfindung, einen verbesserten Querträger zur Verfügung zu stellen. Insbesondere soll der Querträger sowohl für Kraftfahrzeuge mit Links- als auch mit Rechtslenkung und/oder für unterschiedliche Kraftfahrzeugbreiten geeignet sein.

Diese Aufgabe wird gelöst durch einen Querträger mit den Merkmalen des Anspruchs 1. Vorteilhafte Ausgestaltungen sind Gegenstand der Unteransprüche.

Der Querträger, insbesondere für ein Kraftfahrzeug, ist - ohne Berücksichtigung von hieran angebrachten Haltern oder hierin vorgesehenen Öffnungen - zumindest in einem Bereich symmetrisch ausgebildet, wobei unterschiedliche Anordnungen des Bereichs im Querträger und/oder unterschiedliche Anordnungen des Querträgers möglich sind. So kann beispielsweise ein fahrerseitiger Bereich und/oder ein beifahrerseitiger Bereich und/oder der Mittelbereich für rechts und links gelenkte Kraftfahrzeuge durch Gleichteile gebildet werden, an denen jedoch gegebenenfalls unterschiedliche angeordnete Öffnungen und/oder Anbindungen vorgesehen sein können. Durch die Ausgestaltung als Gleichteile, können die Herstellungskosten, insbesondere für kleinere Serien, verringert werden. Ist zusätzlich eine Längenverschiebbarkeit gegeben, so kann - bei entsprechender Auslegung - der gleiche Querträger auch für Kraftfahrzeuge unterschiedlicher Breite verwendet werden. Der Querträger besteht vorzugsweise aus einem Hohlprofil oder zusammengesetzten Hohlprofilen. Diese Ausgestaltungsform ist leichter als eine prinzipiell ebenfalls mögliche Ausgestaltung mit zusammengesetzten Schalen, da die überstehenden Ränder für die gegenseitige Anbringung aneinander entfallen kann. Ferner bauen Querträger mit einem Hohlprofil mangels der überstehenden Ränder kleiner.

Der Querträger ist insbesondere bevorzugt - ohne Berücksichtigung von hieran angebrachten Haltern oder hierin vorgesehenen Öffnungen - zumindest in einem Bereich spiegelsymmetrisch bezüglich der Mittelebene für rechts- und links gelenkte Kraftfahrzeuge ausgebildet.

Ebenfalls vorteilhaft für die Verwendung von Gleichteilen ist, wenn der Querträger punktsymmetrisch zum Schnittpunkt einer Achse und einer Ebene ist, wobei die Achse, die senkrecht zu der Ebene angeordnet ist, und die Ebene eine Ebene ist, in welcher die gesamten Längsachsen der einzelnen Bereiche des Querträgers liegen.

Gleiches gilt, wenn der Querträger für rechtsgelenkte Kraftfahrzeuge den Querträgern für linksgelenkte Kraftfahrzeuge unter 180 ° -Drehung um eine in normale Fahrtrichtung des Kraftfahrzeugs weisende Achse entspricht.

Vorzugsweise entsprechen Querträger für rechtsgelenkte Kraftfahrzeuge den Querträgern für linksgelenkte Kraftfahrzeuge durch eine Spiegelung an einer Ebene, die senkrecht zur normalen Fahrtrichtung angeordnet ist.

Querträger für rechtsgelenkte Kraftfahrzeuge entsprechen bevorzugt den Querträgern für linksgelenkte Kraftfahrzeuge unter 180°-Drehung um eine horizontale Achse, die senkrecht zur normalen Fahrtrichtung angeordnet ist.

Vorzugsweise entsprechen Querträger für rechtsgelenkte Kraftfahrzeuge den Querträgern für linksgelenkte Kraftfahrzeuge Spiegelung an einer Ebene, die vertikal angeordnet in der normalen Fahrtrichtung liegt.

Der Querträger ist vorzugsweise mindestens dreiteilig, insbesondere bevorzugt genau dreiteilig, ausgebildet, wobei es mindestens aufweist ein fahrerseitiges Querträgerteil, ein beifahrerseitiges Querträgerteil und ein Zwischenstück.

Dabei unterscheidet sich vorzugsweise das fahrerseitige Querträgerteil und das beifahrerseitige Querträgerteil nur durch die Anbringung oder Ausgestaltung von Öffnungen und/oder Anbindungen.

Vorzugsweise sind das fahrerseitige Querträgerteil und das Zwischenstück bzw. das beifahrerseitige Querträgerteil und das Zwischenstück vor einem Fixieren im Rahmen der Montage relativ zueinander in Längsrichtung der entsprechenden Endbereiche verschiebbar ausgebildet. Dies ermöglicht eine Breitenanpassbarkeit, zumindest aber einen gewissen Toleranzausgleich.

Das Zwischenstück wird bevorzugt durch eine Muffe, die auf die Enden der Querträgerteile geschoben ist, oder einen Einsatz gebildet, der in die Enden der Querträgerteile eingeschoben ist. Dabei kann - um bestimmte Kombinationen und/oder Anordnungen von Bauteilen relativ zueinander sicherzustellen - der Anschlussbereich der Bauteile entsprechend mit einem Index versehen oder entsprechend ausgebildet sein.

Der Querträger ist vorzugsweise mit einem durchgehenden Hohlraum als ein- oder mehrteiliges Hohlprofil ausgebildet. Dies spart Gewicht und ermöglicht die Durchleitung von Luft, Kabeln und/oder Schläuchen.

Vorzugsweise ist ein Querträger mit integrierter Luftführung vorgesehen, wobei der Querträger mindestens eine Öffnung zur Luftein- oder -ausleitung in den Innenraum desselben aufweist und im Innenraum des Querträgers eine mindestens einen Luftkanal bildende Isolation vorgesehen ist.

Die Isolation kann nach außen überstehend, insbesondere vor dem Aufschieben eines Anschlussbauteils frei nach außen überstehend, ausgebildet sein. Die Isolation kann hierbei auch mehrteilig ausgebildet sein, so dass im Bereich der Öffnung nur eine Art Manschette vorgesehen ist. Im übrigen Bereich des Querträgers kann die Isolation bspw. durch eine auf die Innenflächen aufgesprühte Isolation gebildet sein. Dadurch, dass die Isolation im Bereich der Öffnung des Querträgers nach außen übersteht, ist eine vereinfachte Montage des Anschlussbauteils durch Aufschieben möglich, wobei die Isolation gleichzeitig auch die Funktion einer Dichtung übernimmt.

Die Isolation, d.h. der Luftkanal, besteht bevorzugt aus einem Schaummaterial. Der Luftkanal wird bevorzugt im Twin-sheet-Verfahren hergestellt. Hierbei werden zwei geschäumte Folien gleichzeitig tiefgezogen und miteinander im Bereich der Ränder (1-6 mm) verklebt oder verschweißt.

Eine weitere Herstellungsmöglichkeit für die Isolation besteht darin, dass der Luftkanal blasgeformt wird, wobei beim Blasen die Wände direkt aufgeschäumt werden. Der Vorteil dieses Verfahrens liegt neben einer verkürzten Prozesskette auch darin, dass keine Ränder zum Fügen erforderlich sind, die zusätzlichen Bauraum beanspruchen, beim Umbiegen sich störend auswirken und ggf. auch reißen können. Der Luftkanal kann auch aus einem Schlauch mit geschäumten Wänden gebildet sein.

Die Montage des Luftkanals erfolgt vorzugsweise mittels Einziehens, wobei der Luftkanal bevorzugt derart ausgebildet ist, dass er sich selbst, ggf. unterstützt von Druckluft, wieder in seine Ausgangsform, welche dem Verlauf des Hohlraums im Querträger entspricht, ausdehnt.

Als Material für die Isolation wird vorzugsweise ein chemisch oder physikalisch geschäumter Thermoplast, wie insbesondere Polyethylen oder Polypropylen verwendet. Dabei liegt der Werkstoff bevorzugt als Halbzeug in Form einer Schaumfolie oder eines Schaumschlauchs vor, insbesondere mit einer Dicke von 1 bis 6 mm, vorzugsweise von 2,5 bis 3,5 mm und insbesondere von ca. 3 mm. Die Dichte beträgt bevorzugt 30 bis 500 g/l, vorzugsweise 50 bis 200 g/l, insbesondere ca. 100 g/l.

Als Isolationsmaterialien kommen ggf. auch Schäume, wie PU-Schäume, Partikelschäume, Mineralschäume mit unterschiedlichsten Bindern in Frage. So sind insbesondere EPP, EPE, EPS, EPS/PPO, XPP, XPE oder chemisch oder physikalisch geschäumte Polyolefine geeignet. Aus Feuchtigkeitsgründen ist der Schaum bevorzugt geschlossenporig ausgebildet.

Die den Luftkanal bildende Isolation wird vorzugsweise in den Querträger eingelegt, wobei sie zur Fixierung an den Innenflächen des Querträgers zumindest bereichsweise angeklebt werden kann.

Im Folgenden wird die Erfindung anhand mehrerer Ausführungsbeispiele mit Varianten, teilweise unter Bezugnahme auf die Zeichnung, im Einzelnen erläutert. In der Zeichnung zeigen:
- Fig. 1: eine perspektivische Darstellung eines mehrteiligen Querträgers gemäß dem ersten Ausführungsbeispiel für ein Kraftfahrzeug mit Linkslenkung,

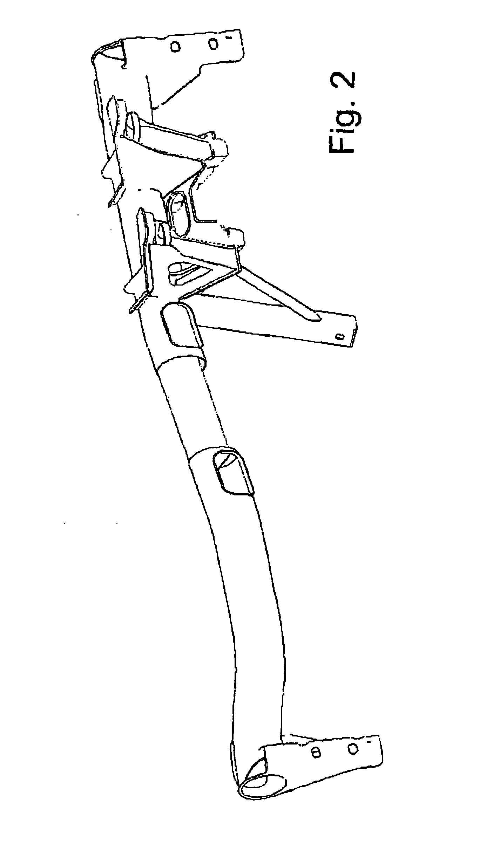

- Fig. 2: eine andere Ansicht des Querträgers von Fig. 1,

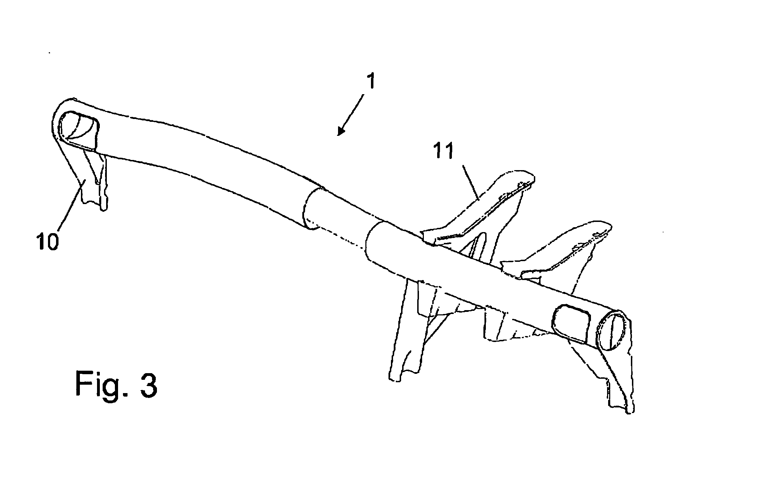

- Fig. 3: den Querträger von Fig. 1 im Falle einer Verwendung für ein Kraftfahrzeug mit Rechtslenkung, und
- Fig. 4: eine überlagerte Darstellung eines einstückig ausgebildeten Querträgers für ein links gelenktes und ein rechts gelenktes Kraftfahrzeug gemäß dem zweiten Ausführungsbeispiel.

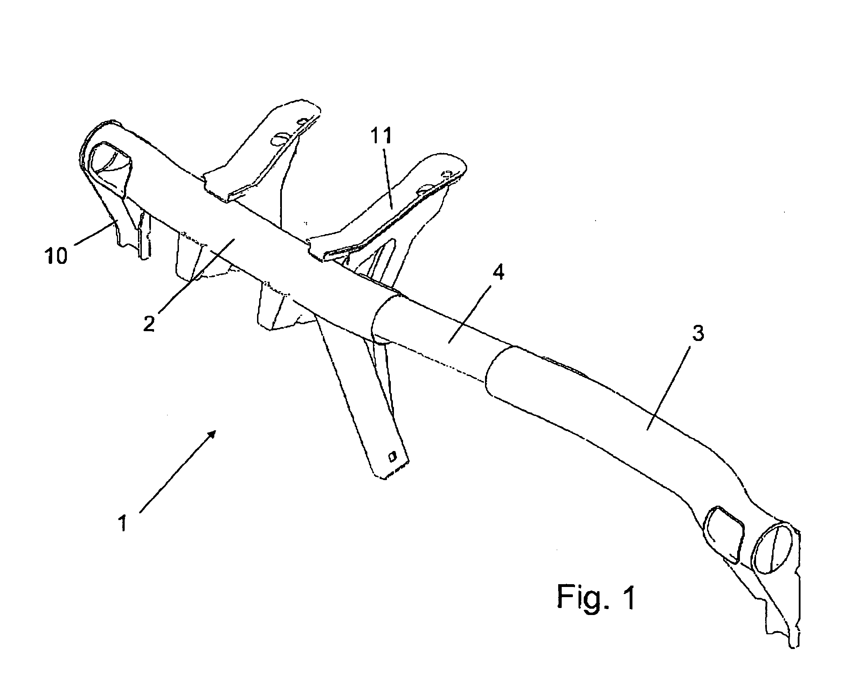

Ein Querträger 1 eines Kraftfahrzeugs, vorliegend mit integrierter Luftführung, wie in Fig. 1 dargestellt, wird gemäß dem vorliegenden ersten Ausführungsbeispiel durch einen dreiteiligen Querträger, bestehend aus einem fahrerseitigen Querträgerteil 2, einem beifahrerseitigen Querträgerteil 3 und einem Zwischenstück 4, gebildet. Vorliegend ist der Querträger 1 durchgehend innen hohl ausgebildet, so dass über ihn die Luftverteilung der von der Klimaanlage kommenden, temperierten Luft auf die Seitendüsen (nicht dargestellt) erfolgen kann. Für die Luftein- und -ausleitung in den bzw. aus dem im Querträger 1 ausgebildeten Luftkanal sind zwei benachbart zum Zwischenstück 4 angeordnete Eintrittsöffnungen und zwei außenseitig angeordnete Austrittsöffnungen in den beiden Querträgerteilen 2 und 3 vorgesehen. Die Öffnungen weisen jeweils einen leicht nach außen gezogenen Rand auf und haben einen abgerundet rechteckförmigen Querschnitt.

Die drei den Querträger 1 bildenden Teile 2, 3 und 4 sind vorliegend aus Blech gefertigt, welches nach dem Zuschneiden und Biegen mittels eines hnenhochdruckumformverfahrens umgeformt wird. Die Öffnungen werden im Innenhochdruckumformwerkzeug von Innen nach Außen durch ziehbare Stempel eingebracht.

Andere Herstellungsarten für die einzelnen Teile, wie insbesondere Strangpressen, Walzen und Schweißen oder Rollprofilieren, sind ebenfalls möglich. Anschließend erfolgt ein Biegen. Die Öffnungen können mittels Laser- oder Wasserstrahlschneidens oder eines sonstigen spanenden Verfahrens eingebracht werden. Die Enden werden bedarfsgerecht abgelängt und, sofern erforderlich, gebogen (insbesondere falls es sich wie gemäß dem vorliegenden Ausführungsbeispiel bei den beiden Querträgerteilen 2 und 3 um Gleichteile handelt, die sich nur durch die Anordnung von Öffnungen und Anbindungen unterscheiden). Das Profil kann auch aus zusammengesetzten Elementen, wie bspw. Halbschalen, gebildet sein und im Prinzip beliebige Querschnittsformen aufweisen.

Besonders kostengünstig, insbesondere bei kleineren Serien, kann das Bauteil hergestellt werden, wenn im Wesentlichen als Gleichteile ausgebildete Querträgerteile verwendet werden, d.h. das fahrerseitige und das beifahrerseitige Querträgerteil sind - abgesehen von mittels einfachen nachfolgenden Bearbeitungsschritten - gleich ausgebildet, wie auch die Querträgerteile für Rechts- und Linkslenker, so dass diese mit einem einzigen, kleineren Werkzeug durch Biegen hergestellt werden können. Die Enden können durch Ausklinken oder Aushalsen anschließend je nach Bedarf auch unterschiedlich bearbeitet werden. Die Öffnungen können durch axiales Einfahren von Werkzeugen hergestellt werden.

Nach der Herstellung des Querträgers bzw. dessen Teile, wie vorliegend, werden Halter und sonstige Anbindungen angeschweißt. Vorliegend werden an den äußeren Enden des Querträgers 1 A-Säulen-Halter 10 angeschweißt, so dass der Querträger 1 einfach und sicher mit den A-Säulen eines Kraftfahrzeugs verbunden werden kann. Am fahrerseitigen Querträgerteil 2 sind zudem Halter 11 für das Lenkrad und das Head-up Display, am beifahrerseitigen Querträgerteil 3 Halter für den Airbag (in Fig. 1 nicht dargestellt) angebracht, vorliegend ebenfalls mittels Schweißens.

Die beiden Querträgerteile 2 und 3 werden über das Zwischenstück 4 miteinander verbunden, vorliegend mittels einer Schiebesitz-Verbindung, wobei der Außendurchmesser des Zwischenstücks 4 jeweils dem Innendurchmesser der Querträgerteile 2 und 3 entspricht, d.h. der Querträger 1 ist in seinem mittleren Bereich mit einem verkleinerten (Außen-)Durchmesser ausgebildet. Durch die Ausgestaltung als Schiebesitz lassen sich Toleranzen ausgleichen. Für die Fixierung werden die Querträgerteile 2 und 3 mit dem Zwischenstück 4 verschweißt, jedoch kann auch eine form- und/oder kraftschlüssige Verbindung vorgesehen sein.

Der Querträger 1 weist gemäß dem ersten Ausführungsbeispiel über seine gesamte Länge einen im Wesentlichen kreisförmigen, innen einen durchgehenden und endseitig offenen Hohlraum bildenden Querschnitt auf. Femer verläuft die Längsachse des Querträgers 1 in einer Ebene, wobei die Längsachse fahrerseitig in Richtung auf den Fahrer zu und beifahrerseitig in Richtung von dem Beifahrer weg leicht bügelartig gebogen ausgebildet ist, so dass das Zwischenstück 4 vorliegend eine schräg bezüglich der Querachse des Kraftfahrzeugs verlaufende Längsachse aufweist.

Für den bzw. die Luftkanäle kann in den Querträger 1 eine Isolation eingebracht werden, welche einen Luftkanal bildet, so dass die von der Klimaanlage temperierte Luft über den Strömungsweg hinweg bis zum Austritt aus dem Querträger 1 möglichst wenig ihre Temperatur verändert. Der Luftkanal kann, wenn er montiert wird, was insbesondere mittels Einziehen erfolgt, dadurch fixiert werden, dass mindestens eine Fixierung vorgesehen ist, die beispielsweise für ein Ende des Luftkanals durch eine am Querträger montierte Klimaanlage, einen Luftverteiler, einen integrierten Ringkörper oder ein anderes Gehäuseteil und für das andere Ende durch einen an der Trägerstruktur befestigen oder integrierten Ring gebildet ist, durch welchen der Luftkanal mit seinem zweiten Ende gesteckt ist. Dadurch werden die Enden des Luftkanals entweder durch einen einfachen Formkörper (z.B. ein Ring mit 10 bis 20 mm Länge) oder durch ein Gehäuseteil gebildet. Das Gehäuseteil kann beispielsweise die Klimaanlage, ein Luftverteiler, ein Stück Luftkanal, eine Luftumlenkung sein.

Gemäß einer Variante ist die Isolation an der Innenfläche des Querträgers 1 zumindest bereichsweise angeklebt, jedoch bietet diese Variante Nachteile in Hinsicht auf das Recyceln.

Die Isolation besteht gemäß dem vorliegenden Ausführungsbeispiel aus einem geschlossenporigen Schaumstoff, vorliegend chemisch geschäumtem Polyethylen, der eine gewisse Elastizität aufweist, insbesondere dehnbar ist, jedoch so stabil ausgebildet ist, dass er seine Form behält und bei einer Verformung diese wieder einnimmt.

Nach erfolgtem Anschweißen der Anbindungen, dem Zusammenbau des Querträgers 1, dem Verschweißen desselben und dem Einziehen der die Luftkanäle bildenden Isolation kann eine Vormontage weiterer Elemente, wie beispielsweise von Cockpit-Komponenten und/oder Teilen der Kabinenstruktur, erfolgen.

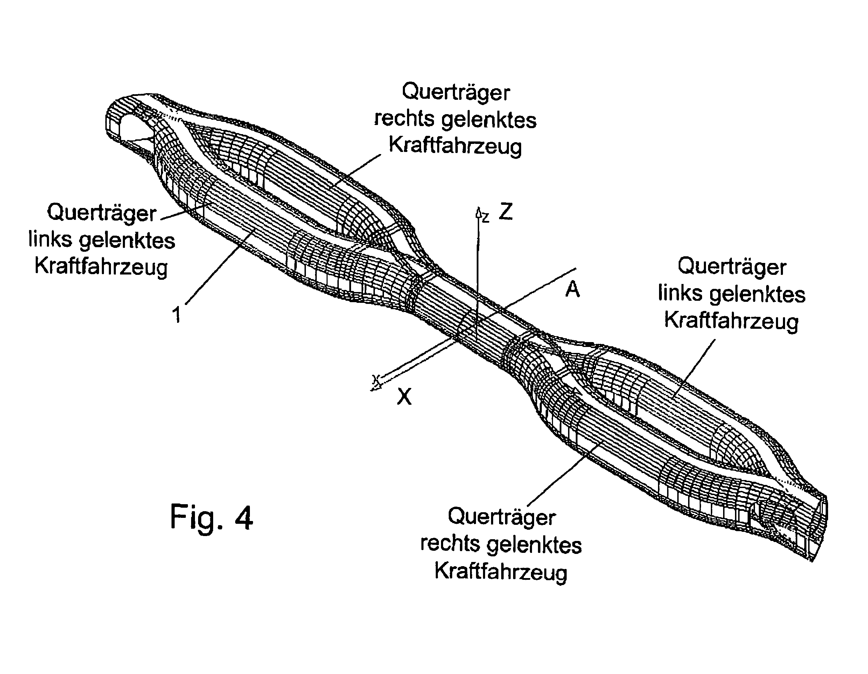

Gemäß dem zweiten, in Fig. 4 dargestellten Ausführungsbeispiel ist der Querträger 1 einstückig ausgebildet, wobei - in Folge der Symmetrie - 180°-Drehung um eine Achse A, die parallel zur X-Achse verläuft, der selbe Querträger - vorliegend sogar ohne Änderungen der Öffnungen für den Luftaustritt - sowohl für ein links als auch ein rechts gelenktes Kraftfahrzeug verwendet werden kann.

Gemäß einem dritten, nicht in der Zeichnung dargestellten Ausführungsbeispiel ist der Querträger derart ausgebildet, dass er durch Drehung um die Z-Achse (siehe Fig. 4) und durch unterschiedliche Ausgestaltung/Anordnung der Querträgerenden und Öffnungen von einem Querträger für ein links gelenktes Kraftfahrzeug in einen Querträger für ein rechts gelenktes Kraftfahrzeug abgewandelt werden kann. Die Basisform ist jedoch die gleiche.

Entsprechend dem Querträger gemäß dem dritten Ausführungsbeispiel kann der Querträger gemäß dem vierten Ausführungsbeispiel durch 180°-Drehung um die Z-Achse und durch unterschiedliche Ausgestaltung/Anordnung der Querträgerenden und Öffnungen von einem Querträger für ein links gelenktes Kraftfahrzeug in einen Querträger für ein rechts gelenktes Kraftfahrzeug abgewandelt werden.

Gemäß einem fünften Ausführungsbeispiel ist der Querträger entsprechend dem ersten Ausführungsbeispiel dreiteilig ausgebildet, wobei für links und rechts gelenkte Kraftfahrzeuge unterschiedliche Querträgerteile, jedoch das gleiche Zwischenstück, lediglich in einer anderen Anordnung, verwendet werden können. Um Zusammenbaufehler zu vermeiden, ist hierbei das Zwischenstück mit unterschiedlich ausgebildeten Profilen an den Enden versehen.

In einem sechsten Ausführungsbeispiel ist das Zwischenstück und das beifahrerseitige Querträgerteil für links und rechts gelenkte Kraftfahrzeuge gleich ausgebildet, so dass im eingebauten Zustand die beiden Teile nur um eine Achse, die parallel zur X-Achse verläuft, um 180° gedreht sind. Das fahrerseitige Querträgerteil ist jedoch spezifisch für die Fahrerseite eines rechts gelenkten Kraftfahrzeuges oder eines links gelenkten Kraftfahrzeuges ausgebildet.

Obwohl vorstehend ausschließlich kreisförmige Profile beschrieben sind, sind beliebige andere Profile mit geeigneten Symmetrien geeignet, insbesondere quadratische, rechteckförmige, sechs- oder achteckförmige Profile, jeweils auch in abgerundeter Form, wobei ggf. auch einzelne Seiten, insbesondere gegenüberliegende Seiten gekrümmt, insbesondere als Bogen ausgebildet sein können, und elliptische Profile.

## Patentansprüche

1. Querträger für ein Kraftfahrzeug, der über seine gesamte Länge innen, einen durchgehenden und endseitig offenen Hohlraum bildenden Querschnitt aufweist, wobei unterschiedliche Anordnungen des Bereichs im Querträger und/oder unterschiedliche Anordnungen des Querträgers (1) möglich sind, **dadurch gekennzeichnet, dass** die Längsachse des Querträgers (1) in einer Ebene verläuft und fahrerseitig in Richtung auf den Fahrer zu und beifahrerseitig in Richtung von dem Beifahrer weg leicht bügelartig gebogen ausgebildet ist, wobei der Querträger (1) - ohne Berücksichtigung von hieran angebrachten Haltern oder hierin vorgesehenen Öffnungen - symmetrisch zu einem im mittleren Bereich angeordneten Punkt ausgebildet ist.

2. Querträger nach Anspruch 1, **dadurch gekennzeichnet, dass** der Querträger (1) - ohne Berücksichtigung von hieran angebrachten Haltern oder hierin vorgesehenen Öffnungen - zumindest in einem Bereich spiegelsymmetrisch bezüglich der Mittelebene für rechts- und links gelenkte Kraftfahrzeuge ausgebildet ist.

3. Querträger nach einem der vorhergehenden Ansprüche, **dadurch gekennzeichnet, dass** der Querträger punktsymmetrisch zum Schnittpunkt einer Achse und einer Ebene ist, wobei die Achse, die senkrecht zu der Ebene angeordnet ist, und die Ebene eine Ebene ist, in welcher die gesamten Längsachsen der einzelnen Bereiche des Querträgers liegen.

4. Querträger nach einem der vorhergehenden Ansprüche, **dadurch gekennzeichnet, dass** der Querträger (1) mindestens zweiteilig ausgebildet ist, wobei die Teile stoff-, form- und/oder kraftschlüssig miteinander verbunden sind.

5. Querträger nach einem der vorhergehenden Ansprüche, **dadurch gekennzeichnet, dass** der Querträger (1) mindestens dreiteilig ausgebildet ist, wobei der Querträger (1) mindestens aufweist ein fahrerseitiges Querträgerteil (2), ein beifahrerseitiges Querträgerteil (3) und ein Zwischenstück (4).

6. Querträger nach Anspruch 5, **dadurch gekennzeichnet, dass** sich das fahrerseitige Querträgerteil (2) und das beifahrerseitige Querträgerteil (3) nur durch die Anbringung oder Ausgestaltung von Öffnungen und/oder Anbindungen unterscheidet.

7. Querträger nach Anspruch 5 oder 6, **dadurch gekennzeichnet, dass** das fahrerseitige Querträgerteil (2) und das Zwischenstück (4) bzw. das beifahrerseitige Querträgerteil (3) und das Zwischenstück (4) vor einem Fixieren im Rahmen der Montage relativ zueinander in Längsrichtung der entsprechenden Endbereiche verschiebbar ausgebildet sind.

8. Querträger nach Anspruch 7, **dadurch gekennzeichnet, dass** das Zwischenstück (4) durch eine Muffe, die auf die Enden der Querträgerteile (2, 3) geschoben ist, oder einen Einsatz gebildet ist, der in die Enden der Querträgerteile (2, 3) eingeschoben ist.

9. Querträger nach einem der vorhergehenden Ansprüche, **dadurch gekennzeichnet, dass** der Querträger (1) mit einem durchgehenden Hohlraum als ein- oder mehrteiliges Hohlprofil ausgebildet ist.

10. Querträger nach Anspruch 9, **dadurch gekennzeichnet, dass** im Hohlraum eine einen Luftkanal bildende Isolation angeordnet ist.

11. Querträger nach Anspruch 10, **dadurch gekennzeichnet, dass** die Isolation durch ein geschäumtes Material, insbesondere einen chemisch oder physikalisch geschäumten Thermoplast, oder einen Schaumstoff, insbesondere einen PU-Schaum, einen Partikelschaum, einen Mineralschaum, gebildet ist.

12. Querträger nach Anspruch 10 oder 11, **dadurch gekennzeichnet, dass** die Isolation elastisch ausgebildet ist.

13. Verwendung eines Querträgers nach einem der vorhergehenden Ansprüche, **dadurch gekennzeichnet, dass** der Querträger für rechtsgelenkte Kraftfahrzeuge verwendet wird und für linksgelenkte Kraftfahrzeuge unter einer 180°-Drehung um eine in normale Fahrtrichtung des Kraftfahrzeugs weisende Achse verwendet wird.

14. Verwendung eines Querträgers nach einem der Ansprüche 1 bis 12, **dadurch gekennzeichnet, dass** der Querträger für rechtsgelenkte Kraftfahrzeuge verwendet wird und für linksgelenkte Kraftfahrzeuge unter 180°-Drehung um eine horizontale Achse, die senkrecht zur normalen Fahrtrichtung angeordnet ist, verwendet wird.

## Claims

1. Transverse beam for a motor vehicle, which comprises a cross section forming a hollow space over its entire length continuous and open at the end sides, wherein different arrangements of the region in the transverse beam and/or different arrangements of the transverse beam (1) are possible, **characterised in that** the longitudinal axis of the transverse beam (1) proceeds in one plane and is formed slightly arched on the driver side in the direction towards the driver and on the front passenger side in the direction away from the front passenger, wherein the transverse beam (1)- without considering holders or openings mounted thereon- is formed mirror-symmetrical to a point arranged in the centre region.

2. Transverse beam according to claim 1, **characterised in that** the transverse beam (1) - without considering holders or openings mounted thereon- is formed mirror-symmetrical at least in one region with regard to the centre axis for right-hand and left-hand drive motor vehicles.

3. Transverse beam according to one of the preceding claims, **characterised in that** the transverse beam is point-symmetrical to the intersection of an axis and a plane, wherein the axis which is arranged vertically to the plane, and the plane is a plane, in which lie the entire longitudinal axes of the individual regions of the transverse beam.

4. Transverse beam according to one of the preceding claims, **characterised in that** the transverse beam (1) is formed in at least two parts, wherein the parts are connected to one another by material engagement, with positive fit and/or in a force-fit manner.

5. Transverse beam according to one of the preceding claims, **characterised in that** the transverse beam (1) is formed in at least three parts, wherein the transverse beam (1) at least comprises a transverse beam part (2) on the driver side, a transverse beam part (3) on the front passenger side, and an intermediate piece (4).

6. Transverse beam according to claim 5, **characterised in that** the transverse beam part (2) on the driver side and the transverse beam part (3) on the front passenger side are only distinguished by the mounting or arrangement of openings and/or connections.

7. Transverse beam according to claim 5 or 6, **characterised in that** the transverse beam part (2) on the driver side and the intermediate piece (4) or the transverse beam part (3) on the front passenger side and the intermediate piece (4) are formed in a relatively displaceable manner to one another in the longitudinal direction prior to fixing in line with the mounting.

8. Transverse beam according to claim 7, **characterised in that** the intermediate piece (4) is formed by a sleeve, which is pushed on the ends of the transverse beam parts (2, 3), or an insert is formed, which is inserted into the ends of the transverse beam parts (2,3).

9. Transverse beam according to one of the preceding claims, **characterised in that** the transverse beam (1) is formed with a continuous hollow space as a one- or multi-part hollow profile.

10. Transverse beam according to claim 9, **characterised in that** an insulation forming an air duct is formed in the hollow space.

11. Transverse beam according to claim 10, **characterised in that** the insulation is formed by a foamed material, especially a chemically or physically foamed thermoplastic resin or a foamed material, especially a PU foam, a particle foam, a mineral foam.

12. Transverse beam according to claim 10 or 11, **characterised in that** the insulation is formed in a flexible manner.

13. Use of a transverse beam according to one of the preceding claims, **characterised in that** the transverse beam is used for right-hand drive motor vehicles, and is used for left-hand drive motor vehicles with a rotation about 180° around an axis pointing in the normal direction of travel of the motor vehicle.

14. Use of a transverse beam according to one of claims 1 to 12, **characterised in that** the transverse beam is used for right-hand drive motor vehicles, and is used for left-hand drive motor vehicles with a rotation about 180° around a horizontal axis, which is arranged vertically to the normal direction of travel.

## Revendications

1. Traverse, pour un véhicule automobile, qui présente, à l'intérieur, sur toute sa longueur, une section formant un espace creux continu et ouvert aux extrémités, où divers agencements de la zone, dans la traverse, et / ou divers agencements de la traverse (1), sont possibles, **caractérisée en ce que** l'axe longitudinal de la traverse (1) s'étend dans un plan et est configuré en étant légèrement recourbé, en forme d'étrier, côté conducteur dans une direction allant vers le conducteur et, côté passager, dans une direction s'éloignant du passager, où la traverse (1) - sans tenir compte de fixations placées sur ladite traverse ou d'ouvertures prévues dans celle-ci - est configurée de façon symétrique par rapport à un point disposé dans la zone centrale.

2. Traverse selon la revendication 1, **caractérisée en ce que** la traverse (1) - sans tenir compte de fixations placées sur ladite traverse ou d'ouvertures prévues dans celle-ci - est configurée, au moins dans une zone, de façon symétrique par rapport au plan médian pour des véhicules automobiles à direction à droite et à gauche.

3. Traverse selon l'une ou l'autre des revendications précédentes, **caractérisée en ce que** la traverse est à symétrie ponctuelle par rapport au point d'intersection d'un axe et d'un plan, où l'axe est un axe qui est disposé perpendiculairement au plan, et le plan est un plan dans lequel se situent tous les axes longitudinaux des différentes zones de la traverse.

4. Traverse selon l'une quelconque des revendications précédentes, **caractérisée en ce que** la traverse (1) est configurée au moins en deux parties, où les parties sont reliées entre elles par continuité de matière, par complémentarité de forme et / ou assemblées à force.

5. Traverse selon l'une quelconque des revendications précédentes, **caractérisée en ce que** la traverse (1) est configurée au moins en trois parties, où la traverse (1) présente au moins une partie de traverse (2) côté conducteur, une partie de traverse (3) côté passager, et une pièce intermédiaire (4).

6. Traverse selon la revendication 5, **caractérisée en ce que** la partie (2) de la traverse côté conducteur, et la partie (3) de la traverse côté passager, se différencient seulement par la fixation ou la configuration d'ouvertures et / ou d'attaches.

7. Traverse selon la revendication 5 ou 6, **caractérisée en ce que** la partie (2) de la traverse côté conducteur, et la pièce intermédiaire (4), ou bien la partie (3) de la traverse côté passager, et la pièce intermédiaire (4), sont configurées avant une fixation, dans le cadre du montage, en étant mobiles l'une par rapport à l'autre dans le sens longitudinal des zones d'extrémités correspondantes.

8. Traverse selon la revendication 7, **caractérisée en ce que** la pièce intermédiaire (4) est formée par un manchon que l'on fait coulisser aux extrémités des parties (2, 3) de la traverse, ou bien par une pièce rapportée qui est insérée dans les extrémités des parties (2, 3) de la traverse.

9. Traverse selon l'une quelconque des revendications précédentes, **caractérisée en ce que** la traverse (1) est configurée comme un profilé creux en une ou plusieurs parties, en ayant un espace creux continu.

10. Traverse selon la revendication 9, **caractérisée en ce qu'**une isolation formant un conduit d'air est disposée dans l'espace creux.

11. Traverse selon la revendication 10, **caractérisée en ce que** l'isolation est formée par un matériau expansé, en particulier une matière thermoplastique expansée chimiquement ou physiquement, ou bien une mousse synthétique, en particulier une mousse de polyuréthane (PU), une mousse de particules, une mousse minérale.

12. Traverse selon la revendication 10 ou 11, **caractérisée en ce que** l'isolation est configurée de façon élastique.

13. Utilisation d'une traverse selon l'une quelconque des revendications précédentes, **caractérisée en ce que** la traverse est utilisée pour des véhicules automobiles à direction à droite et, pour des véhicules automobiles à direction à gauche, est utilisée suivant une rotation de 180° autour d'un axe pointant dans le sens normal de la marche du véhicule automobile.

14. Utilisation d'une traverse selon l'une quelconque des revendications 1 à 12, **caractérisée en ce que** la traverse est utilisée pour des véhicules automobiles à direction à droite et, pour des véhicules automobiles à direction à gauche, est utilisée suivant une rotation de 180° autour d'un axe horizontal qui est disposé perpendiculairement au sens normal de la marche.
